# EUROPÄISCHE PATENTANMELDUNG

(11) **EP 1 560 157 A2**
(43) Veröffentlichungstag der Anmeldung: **03.08.2005**
(21) Anmeldenummer: 05000987.7
(22) Anmeldetag: 19.01.2005
(51) Int. Cl.: G06M 1/10, G06M 7/00, A01C 7/10

(54) **Verfahren und Vorrichtung zum optischen Zählen kleiner Körperchen**

(30) Priorität: 28.01.2004 DE 102004004133
(71) Anmelder: Amazonen-Werke H. Dreyer GmbH & Co. KG, 49205 Hasbergen (DE)
(72) Erfinder: Scheufler, Bernd, Dr., 49205 Hasbergen (DE); Marquering, Johannes, Dr., 49176 Borgloh (DE); Kötter, Heiner, 49086 Osnabrück (DE)

(57) **Zusammenfassung**

Vorrichtung zum optischen Zählen kleiner Körperchen, insbesondere die von einer Sämaschine auszubringendes Saatkörner bei denen die zu zählenden Körper einen mit Sensoren besetzten Messraum passieren und dabei den Strahlengang zwischen einem Lichtemitter und einem Lichtdetektor der Sensoren unterbrechen. Um eine Vorrichtung und ein Verfahren zum optischen Zählen kleiner Körperchen zu schaffen, mittels welcher Saatkörner unterschiedlicher Größe, z.B. Raps wie auch Bohnen, die eine extrem unterschiedliche Größe zueinander aufweisen, möglichst schnell genau zählen zu können, ist vorgesehen, dass die Sensoren in Durchgangsrichtung der zu zählenden Körperchen gesehen in mehreren Ebenen hinter einander angeordnet sind.

## Beschreibung

Die Erfindung betrifft eine Vorrichtung zum optischen Zählen kleiner Körperchen gemäß der Oberbegriffe der Ansprüche 1 und 6, sowie ein Verfahren zum optischen Zählen gemäß des Oberbegriffes des Patentanspruches 11.

Ein derartiges Verfahren und eine derartige Vorrichtung sind in der EP 0 166 136 A2 beschrieben. Bei dieser Vorrichtung sind im Winkel von 90° zwei Elementarlichtschranken innerhalb eines Messraumes angeordnet, um die durch diesen Messraum fallenden kleinen Körperchen zu zählen. Mittels eines entsprechenden Auswerteverfahrens lassen sich die durch den Messraum fallenden Körperchen in ihrer Anzahl bestimmen.

Der Erfindung liegt die Aufgabe zugrunde, eine Vorrichtung und ein Verfahren zum optischen Zählen kleiner Körperchen zu schaffen, mittels welcher Saatkörner unterschiedlicher Größe, z.B. Raps wie auch Bohnen, die eine extrem unterschiedliche Größe zueinander aufweisen, möglichst schnell genau zählen zu können.

Diese Aufgabe wird in einer ersten Lösung dadurch gelöst, dass die Sensoren in Durchgangsrichtung der zu zählenden Körperchen gesehen in mehreren Ebenen hintereinander angeordnet sind. Infolge dieser Maßnahme lassen sich verschiedene Sensoreinheiten für jeweils ein entsprechendes Korngrößenspektrum bilden so dass entsprechend der auszubringenden Saatgutart die jeweilige Sensoreinheit aktiviert wird, um Messsignale an eine elektronische Auswerteeinheit zu übermitteln. Die jeweiligen Sensoren sind auf die jeweilige Saatgutart oder zu Saatgutgruppen zusammengefasste Saatgutarten entsprechend abgestimmt.

Bei einer weiteren Lösung ist vorgesehen, dass verschiedene Typen von Sensoren vorgesehen sind. Hierdurch kann entsprechend der jeweiligen Saatgutart der entsprechend optimale Sensortyp zur Messung verwendet werden.

So können beispielsweise zum Messen von Bohnen, die einen relativ großen Durchmesser aufweisen, relativ große Elemente aufweisende Lichtschranken verwendet werden, während beim Ausbringen von Saatgutarten mit kleineren Körperchen entsprechend kleinere Elemente aufweisende Lichtschranken zum Einsatz kommen.

Auch kann es sinnvoll sein, auf Laserlichtbasis arbeitende Sensoren einzusetzen. Durch entsprechende Versuche lassen sich die jeweiligen optimalen Sensortypen ermitteln.

Zum Zählen der Körner einiger Saatgutarten kann es sinnvoll sein, wenn entsprechende Versuche dies ergeben auf Infrarotlichtbasis arbeitende Sensoren einzusetzen. Diese Sensoren können, wie erste Versuche gezeigt haben, bei einigen Saatgutarten unter bestimmten Einsatzbedingungen, besonders gute Ergebnisse bringen.

Bei einer weiteren Lösung der Erfindung ist vorgesehen, dass die Sensoren mit einer ein Speichermedium aufweisenden elektronischen Auswerteeinrichtung verbunden sind, dass in dem Speichermedium ein Auswerteprogramm hinterlegt ist, mittels welchen die von den Sensoren übermittelten Signale in Anzahl der Körperchen umsetzbar sind. Infolge dieses Auswerteprogramms lassen sich in einfacher Weise aus den Signalen der Sensoren die Anzahl der Körperchen ermitteln.

Versuche haben in überraschender Weise gezeigt, dass besonders hohe Messgenauigkeiten erzielbar sind, wenn die Messebene der Sensoreinheit in einem von 90° abweichenden Winkel zur Durchgangsrichtung der Körperchen durch den Messraum angeordnet ist. Hierbei können mehrere Sensoreinheiten mit ihrer Messebene auch in kreuzweise zueinander angeordnet sein.

Es können auch verschiedenartig ausgebildete Sensoreinheiten in Durchgangsrichtung der Körperchen hintereinander angeordnet sein. Hierbei ist es sowohl möglich, dass bei den Messvorgängen verschiedenartig ausgebildete Sensoreinheiten miteinander kombiniert werden, als auch, dass für die jeweilige Saatgutgruppe die entsprechende Sensoreinheit aktiviert wird, so dass die Messsignale in entsprechend optimierter Weise an die Auswerteeinheit übermittelt werden.

Um nur den jeweils benötigten und erforderlichen Messaufwand zu betreiben und eine optimal schnelle Auswertung zu erreichen, ist vorgesehen, dass die verschiedenen Sensoreinheiten eine unterschiedliche Anzahl von Sensoren aufweisen. Je nach Saatgutart wird dann die jeweils unter den herrschenden Bedingungen optimal arbeitende Sensoreinheit aktiviert.

Des weiteren ist vorgesehen, dass verschiedene Sensoreinheiten mit unterschiedlichen Sensorelementen vorgesehen sind. Es ist auch möglich die unterschiedlichen Sensoreinheiten miteinander zu kombinieren.

Bei dem Verfahren zum optischen Zählen von Körperchen ist zur Lösung der Aufgabe vorgesehen, dass ein Auswerteprogramm vorgesehen ist, das je nach auszubringendem Saatguttyp die Messwerte aller Sensoren der Sensoreinheit oder nur eine verringerte Anzahl von Sensoren der Sensoreinheit zur Ermittlung der Anzahl der Körperchen herangezogen werden.

Infolge dieser Maßnahme wird je nach auszubringendem Saatgut nur die jeweils erforderliche Anzahl von Sensoren aktiviert um ein möglichst schnelles und genaues Auswerteergebnis bzgl. der Anzahl der zu zählenden Körperchen zu erreichen.

Bei einem weiteren Verfahren ist vorgesehen, dass Sensoreinheiten mit unterschiedlicher Anzahl von Lichtemittern und Lichtdetektoren in Durchgangsrichtung der zu zählenden Körperchen gesehen hintereinander angeordnet sind und je nach auszubringendem Saatgut die entsprechenden Signale von der jeweiligen bzw. aktivierten Sensoreinheit zur Auswertung herangezogen werden.

Um in automatischer Weise die jeweils erforderlichen Sensoren und/oder Sensoreinheiten für die Auswertung zu aktivieren, damit sie entsprechende Messsignale liefern, ist vorgesehen, dass mittels der hinterlegten Auswertesoftware entsprechend des auszubringenden Saatgutes die entsprechend hinterlegte Anzahl von Sensoren und/oder Sensoreinheiten zur Auswertung herangezogen werden.

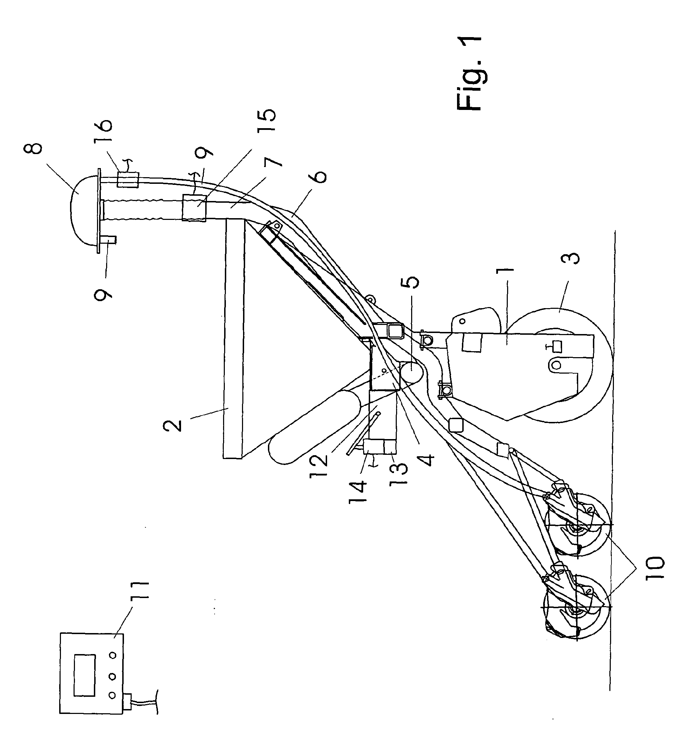

Weitere Einzelheiten der Erfindung sind den übrigen Unteransprüchen, der Beispielsbeschreibung und den Zeichnungen zu entnehmen. Hierbei zeigen
- Fig.1: die erfindungsgemäß ausgestattete pneumatische Sämaschine in Prinzipdarstellung,

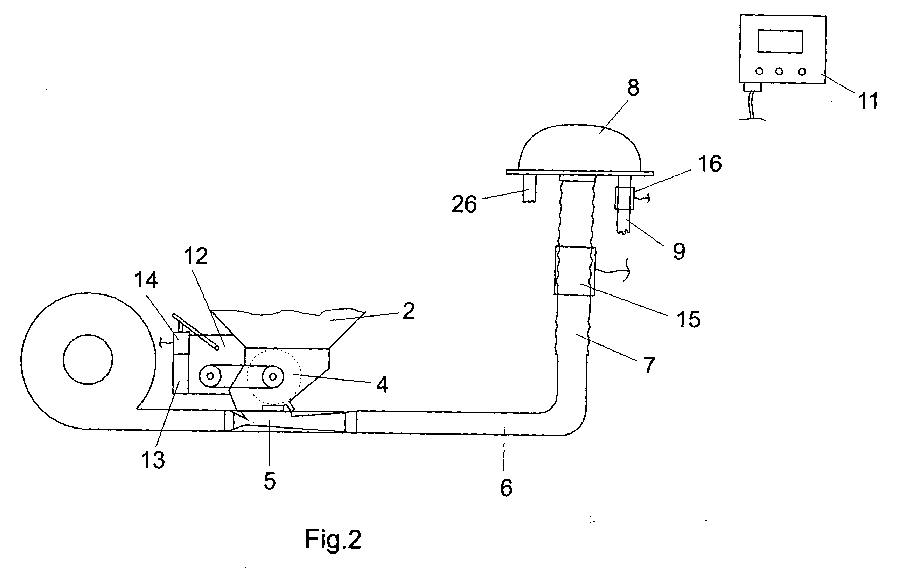

- Fig.2: die Anordnung der Sensoren in dem Verteilersystem der Sämaschine in vergrößerter Darstellung und in Prinzipdarstellung,
- Fig.3: die Anordnung der Sensoren in der Verteilerleitung in Schnitt- und in Prinzipdarstellung,
- Fig.4: die Anordnung der Sensoren einer Sensoreinheit gemäß Fig. 3 in Seitenansicht und in Prinzipdarstellung,
- Fig.5: eine weitere Anordnung mehrerer Sensoreinheiten in der Verteilerleitung in Prinzipdarstellung,
- Fig. 6: eine weitere Anordnung mehrerer Sensoreinheiten in der Verteilerleitung in Prinzipdarstellung,
- Fig.7: eine weitere Anordnung der Sensoren in der Verteilerleitung in Seitenansicht und in Prinzipdarstellung,
- Fig.8: eine weitere Anordnung der Sensoreinheit in Seitenansicht und Prinzipdarstellung und
- Fig.9: eine weitere Anordnung der Sensoreinheiten in Seitenansicht und Prinzipdarstellung.

Die Sämaschine ist als pneumatische Verteilmaschine ausgebildet. Sie weist einen Rahmen 1 und Vorratsbehälter 2 auf. Der Rahmen 1 stützt sich auf Laufrädern 3 oder einer Bodenwalze auf dem Boden ab. Dem Vorratsbehälter 2 ist ein Zentraldosierer 4 zugeordnet, der das sich im Vorratsbehälter 2 befindliche Saatgut über eine Schleuse 5 in eine zentrale Zuführleitung 6, die als Steigrohr 7 ausgebildet ist, einleitet. Dieses Steigrohr 7 mündet an seinem oberen Ende in einem Verteilerkopf 8, über den das dosierte Saatgut auf die einzelnen sich an dem Verteilerkopf 8anschließenden Saatleitungen 9 gleichmäßig aufgeteilt wird. Die Saatleitungen 9 führen zu den am Rahmen 1 angelenkten Säscharen 10. Dem Laufrad 3 ist eine nicht dargestellte Wegstreckenmesseinrichtung zugeordnet, die Messdaten an eine als Bordcomputer 11 ausgebildete elektronische Auswerteeinheit übermittelt. Der Dosierer 4 wird über einen Antriebsstrang und ein einstellbares Getriebe 12 von einer Kraftquelle 13 angetrieben. Das Getriebe 12 wird über einen Einstellmotor 14 eingestellt und von dem Bordcomputern 11 angesteuert.

Dem Steigrohr 7 ist ein Sensor 15 zur Ermittlung der insgesamt ausgebrachten Saatkörneranzahl zugeordnet. Des weiteren ist eine Sensoreinheit 16 zumindest einer Saatleitung 9 zugeordnet. Der Sensor 15 und die Sensoreinheit 16 sind über Übertragungsmittel mit dem Bordcomputer 11 verbunden, so dass die Messdaten der Sensoren 15 und 16 an den Bordcomputer 11 übermittelt werden. Die Sensoreinheit 16 weist die Lichtschranken 17 auf. Die Lichtschranken 17 zählen die einzelnen von dem Verteilerkopf 8 zu den jeweiligen Säscharen 10 gelangenden Anzahl Saatkörner. Hierbei wird davon ausgegangen, dass über den Verteilerkopf 8 das durch das Steigrohr 7 zum Verteilerkopf 8 gelangende Saatgut gleichmäßig auf die einzelnen Saatleitungen 9 aufgeteilt wird.

Die als Lichtschranken 17 ausgebildeten Sensoren der Sensoreinheit 16 sind kreisförmig verteilt um die Verteilerleitung 9 angeordnet und können so innerhalb der Verteilerleitung 9 die durch den Bereich der Sensoreinheit geförderten Körperchen des Saatgutes zählen. Die Sensoren 17 der Sensoreinheit 16 sind mittels Übertragungsleitung mit der elektronischen Auswerteeinheit 11, bspw. eines Bordcomputers verbunden. Die Körperchen passieren den Messraum 18, wie durch den Pfeil 19 angedeutet. Die Körperchen erzeugen durch das Passieren der Sensoreinheit 16 Messimpulse an den Sensoren 17 die über die Übertragungsleitung an die Auswerteeinheit übermittelt werden. Aufgrund des in dem Speichermedium,der Auswerteeinheit 11 hinterlegten Auswerteprogramms werden diese Messsignale ausgewertet und in Anzahl Körner umgesetzt, so dass die den Messraum im Bereich der Sensoreinheit 16 passierenden Körperchen gezählt und die ausgebrachte Saatgutmenge mittels des Auswerteprogramms errechnet werden kann.

In einer Variante des Auswerteprogramms, welches in der Speichereinheit der Auswerteeinheit 11 hinterlegt ist, ist vorgesehen, das entsprechend der Saatgutart alle oder nur ein Teil der Lichtschranken 17 der Sensoreinheit 16 aktiviert sind bzw. nur die von einigen oder von allen Lichtschranken 17 übermittelten Messsignale verwertet werden. So wird man beispielsweise bei dem Ausbringen großer Saatgüter, wie beispielsweise Mais oder Bohnen nur die Messsignale einiger Lichtschranken 17 berücksichtigen, während man bei dem Ausbringen von kleineren Saatgütern, wie beispielsweise Raps alle Messsignale aller Lichtschranken 17 berücksichtigt. Eine mittlere Anzahl von Lichtschranken zu aktivieren bzw. deren Messsignale zu verwenden, wird man bei Saatgütern mittlerer Größenordnung, wie beispielweise Gerste, Weizen, Hafer anwenden. Hierbei kann dann jede zweite Lichtschranke 17 aktiviert bzw. das Messsignal jeder zweiten Lichtschranke 17 verwendet werden.

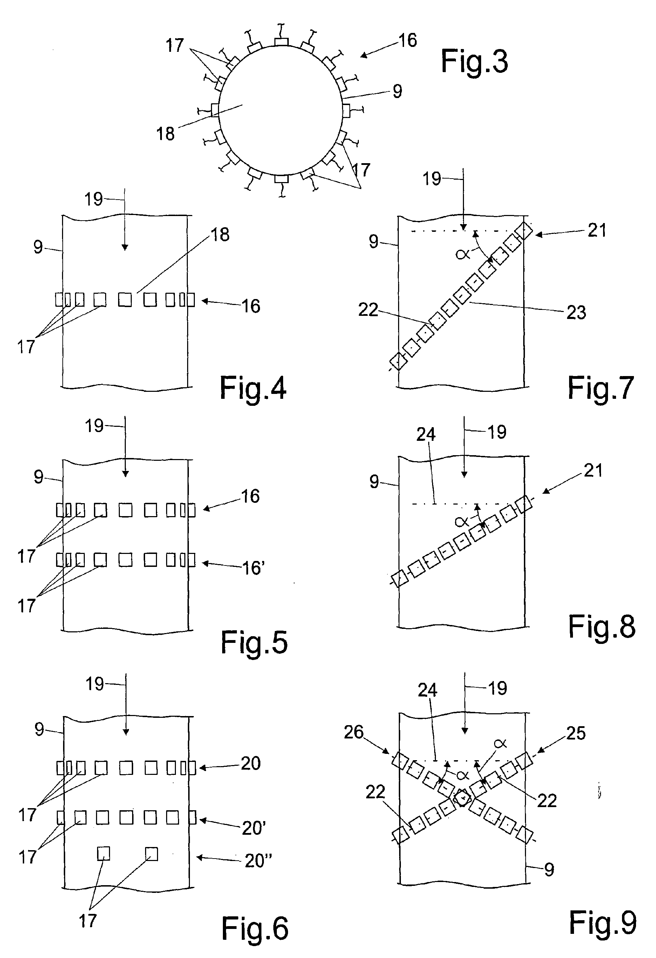

Bei dem Ausführungsbeispiel nach Fig. 5 sind zwei Sensoreinheiten 16 und 16' hintereinander angeordnet, wobei die obere Sensoreinheit 16 und die untere Sensoreinheit 16' die gleiche Anzahl von Sensoren 17 aufweisen. Beide Sensoreinheiten 16 und 16' sind mit Übertragungsleitungen mit der Auswerteeinheit 11 verbunden, in welcher ein entsprechendes Auswerteprogramm hinterlegt ist, um aus den von den Sensoren 17 der Sensoreinheit übermittelten Signalen die Anzahl der ausgebrachten bzw. dosierten Saatkörner zu ermitteln.

Bei dem Ausführungsbeispiel gemäß Fig. 6 sind drei Sensoreinheiten 20, 20' und 20'' hintereinander angeordnet, wobei jede Sensoreinheit 20, 20' und 20'' eine andere Anzahl von Sensoren 17 aufweist. Die obere Sensoreinheit 20 ist für das Zählen kleiner Körperchen beispielsweise Raps vorgesehen, während die mittlere Sensoreinheit 20' für das Zählen mittelgroßer Körperchen, wie beispielsweise Gerste, Hafer, Weizen vorgesehen ist und die untere Sensoreinheit 20'' für das Zählen beispielsweise von Mais oder Bohnen.

Bei dem Ausführungsbeispiel nach Fig. 7 ist die Sensoreinheit 21 bzw. die Messebene 22, in welche die Sensoreinheit 21 angeordnet, ist in einem von 90° abweichenden Winkel α zur durch den Pfeil 19 angedeuteten Strömungsrichtung der dem Messraum 23 durchströmenden Körperchen innerhalb der Verteilerleitung 6 angeordnet. Der Winkel a beträgt hier etwa 45°.

Bei dem Ausführungsbeispiel gemäß Fig. 8 ist die Ebene der Sensoreinheit 21 ebenfalls in einem von 90° abweichenden Winkel α beispielsweise 30° zur Senkrechten 24 zur Strömungsrichtung, wie durch den Pfeil angedeutet 19, angeordnet.

Gemäß Fig. 9 sind zwei Sensoreinheiten 25 und 26 ebenfalls unter einem von 90° abweichenden Winkel α zur Strömungsrichtung 19 der den Messraum 23 und die Verteilerleitung 9 durchströmenden Körperchen angeordnet. Hierbei sind die beiden Sensoreinheiten 25 und 26 bzw. ihre Messebenen 22, in welcher die Sensoren 17 angeordnet sind, über Kreuz angeordnet.

Die Sensoren der verschiedenen vorerwähnten Sensoreinheiten können unterschiedlichen Typs sein, so beispielsweise Lichtschranken, verschieden große Lichtschranken, auf Laserlicht Basis arbeitende Sensoren, auf Infrarotlicht Basis arbeitende Sensoren etc.. Die Lichtschranken bestehen aus einem Lichtemitter und einem Lichtdetektor, wobei der Strahlengang durch die den Messraum passierenden Körperchen jeweils unterbrochen wird. Wie bereits vor erwähnt, können Sensoreinheiten mit unterschiedlicher Anzahl von Lichtemitter und Lichtdetektoren in Durchgangsrichtung der zu zählenden Körperchen gesehen hintereinander angeordnet sein, wobei je nach auszubringendem Saatgut die entsprechenden Signale von der jeweiligen bzw. aktivierten Sensoreinheit zur Auswertung herangezogen werden. Entsprechend der hinterlegten Auswertesoftware werden dann entsprechend des auszubringenden Saatgutes die entsprechend hinterlegte Anzahl von Sensoren oder Sensoreinheiten zur Auswertung, d.h. zur Ermittlung der Anzahl der dem Messraum passierende Körperchen herangezogen. Aus diesen Werten lässt sich dann die Anzahl ausgebrachter Saatkörner pro Flächeneinheit ermitteln.

## Patentansprüche

1. Vorrichtung zum optischen Zählen kleiner Körperchen, insbesondere die von einer Sämaschine auszubringendes Saatkörner bei denen die zu zählenden Körper einen mit Sensoren besetzten Messraum passieren und dabei den Strahlengang zwischen einem Lichtemitter und einem Lichtdetektor der Sensoren unterbrechen, **dadurch gekennzeichnet, dass** die Sensoren (16, 16', 20, 20', 20'') in Durchgangsrichtung (19) der zu zählenden Körperchen gesehen in mehreren Ebenen hinter einander angeordnet sind.

2. Vorrichtung zum optischen Zählen kleiner Körperchen, insbesondere die von einer Sämaschine auszubringendes Saatkörner bei denen die zu zählenden Körper einen mit Sensoren besetzten Messraum passieren und dabei in Strahlengang zwischen einem Lichtemitter und einem Lichtdetektor der Sensoren unterbrechen, **dadurch gekennzeichnet, dass** verschiedene Typen von Sensoren (16, 16', 20, 20', 20'', 21, 25, 26) vorgesehen sind.

3. Vorrichtung nach Anspruch 2, **dadurch gekennzeichnet, dass** verschiedene große Lichtschranken (16, 16', 20, 20', 20'', 21, 25, 26) vorgesehen sind.

4. Vorrichtung nach Anspruch 2, **dadurch gekennzeichnet, dass** auf Laserlichtbasis arbeitende Sensoren (16, 16', 20, 20', 20'', 21, 25, 26) vorgesehen sind.

5. Vorrichtung nach Anspruch 2, **dadurch gekennzeichnet, dass** auf Infrarotlichtbasis arbeitende Sensoren (16, 16', 20, 20', 20'', 21, 25, 26) vorgesehen sind.

6. Vorrichtung zum optischen Zählen kleiner Körperchen, insbesondere die von einer Sämaschine auszubringenden Saatkörner bei ,denen die zu zählenden Körper einen mit Sensoren besetzten Messraum passieren und dabei in Strahlengang zwischen einem Lichtemitter und einem Lichtdetektor der Sensoren unterbrechen, **dadurch gekennzeichnet, dass** die Sensoren (16, 16', 20, 20', 20'', 21, 25, 26) mit einer ein Speichermedium aufweisenden elektronischen Auswerteeinheit (11) verbunden sind, dass in dem Speichermedium ein Auswerteprogramm hinterlegt ist, mittels welchem die von den Sensoren (16, 16', 20, 20', 20'', 21, 25, 26) übermittelten Signale in Anzahl der Körperchen umsetzbar sind.

7. Vorrichtung nach einem oder mehreren der vorstehenden Ansprüche, **dadurch gekennzeichnet, dass** die Messebene (22) der Sensoreinheit (21, 25, 26) in einem von 90 ° abweichenden Winkel zur Durchgangsrichtung (19) der Körperchen durch den Messraum (23) angeordnet ist.

8. Vorrichtung nach einem oder mehreren der vorstehenden Ansprüche, **dadurch gekennzeichnet, dass** verschiedenartig ausgebildete Sensoreinheiten (16, 16', 20, 20', 20'') in Durchgangsrichtung der Körperchen hintereinander angeordnet sind.

9. Vorrichtung nach einem oder mehreren der vorstehenden Ansprüche, **dadurch gekennzeichnet, dass** die Sensoreinheiten (16, 16', 20, 20', 20'', 21, 25, 26) eine unterschiedliche Anzahl von Sensoren (17) aufweisen.

10. Vorrichtung nach einem oder mehreren der vorstehenden Ansprüche, **dadurch gekennzeichnet, dass** Sensoreinheiten (16, 16', 20, 20', 20'', 21, 25, 26) mit unterschiedlichen Typen von Sensorelementen vorgesehen sind.

11. Verfahren zum optischen Zählen kleiner Körperchen, insbesondere die von einer Sämaschine auszubringenden Saatkörner, bei denen die zu zählenden Körperchen einen mit Sensoren besetzten Messraum passieren und dabei den Strahlengang zwischen einem Lichtemitter und Lichtdetektor der Sensoren unterbrechen, **dadurch gekennzeichnet, dass** ein Auswerteprogramm vorgesehen ist, dass je nach auszubringendem Saatguttyp die Messwerte aller Sensoren (17) der Sensoreinheit (16, 16', 20, 20', 20'', 21, 25, 26) oder nur eine verringerte Anzahl von Sensoren (17) der Sensoreinheit (16, 16', 20, 20', 20'', 21, 25, 26) zur Auswertung und Ermittlung der Anzahl von Körperchen herangezogen werden.

12. Verfahren nach Anspruch 11, **dadurch gekennzeichnet, dass** Sensoreinheiten (16, 16', 20, 20', 20'', 21, 25, 26) mit unterschiedlicher Anzahl von Lichtemitter (17) und Lichtdetektoren (17) in Durchgangsrichtung der zu zählenden Körperchen gesehen hintereinander angeordnet sind und je nach auszubringendem Saatgut die entsprechenden Signale von der jeweiligen bzw. aktivierten Sensoreinheit (16, 16', 20, 20', 20'', 21, 25, 26) zur Auswertung herangezogen werden.

13. Verfahren nach Anspruch 11, **dadurch gekennzeichnet, dass** mittels der hinterlegten Auswertesoftware entsprechend des auszubringenden Saatgutes die entsprechend hinterlegte Anzahl von Sensoren (17) und/oder Sensoreinheiten (16, 16', 20, 20', 20'', 21, 25, 26) zur Auswertung herangezogen wird.
